# EUROPEAN PATENT SPECIFICATION

(11) **EP 0 857 414 B1**
(45) Date of publication and mention of the grant of the patent: **16.01.2002**
(21) Application number: 98200362.6
(22) Date of filing: 06.02.1998
(51) Int. Cl.: A01F 15/08

(54) **Bale density control system for agricultural balers.**
Vorrichtung zur Regelung des Pressdruckes einer Strohballenpresse
Système pour contrôler la densité des balles dans une presse à balles

(30) Priority: 11.02.1997 GB 9702791
(43) Date of publication of application: 12.08.1998
(73) Proprietor: NEW HOLLAND BELGIUM N.V., B-8210 Zedelgem (BE)
(72) Inventor: Leupe, Dirk, 8800 Roeselare (BE)
(74) Representative: Vandenbroucke, Alberic

(56) References cited:
- EP-A- 0 379 230
- EP-A- 0 382 263
- EP-A- 0 392 627
- FR-A- 2 676 611
- GB-A- 2 141 664

## Description

The present invention relates generally to an apparatus and a method for controlling the density of packages of crop material formed in an agricultural baler, and more particularly, to an apparatus and a method involving means for suspending the normal operation of the density control system when no charges of crop material are fed into the baler, as on headlands.

Conventional agricultural balers comprise a frame which is travelled on a pair of wheels over a field for picking up therefrom hay, straw or silage grass and feeding this crop material to a baling chamber in which it is compressed to parallelepiped packages under action of a plunger which reciprocates inside the baling chamber. When the packages have reached a predetermined length a tying mechanism is operated to encircle the completed package with a plurality of strands and to knot the strands ends together to form a finished bale which will be ejected out of the baler.

Commonly the baling chamber comprises at least one movable wall portion whereof the position can be adjusted to vary the transverse cross section of the baling chamber and thereby the resistance met by the reciprocating plunger when a new charge of crop material is fed into the chamber. It is well known in the art to equip the movable wall portion with actuator means to automatically adjust its position in response to sensor means sensing the actual force by which the material in the baling chamber is compressed to adjust the density of the package to a predetermined value.

Such systems perform well as long new charges are introduced at a regular pace into the baling chamber. However, during normal baling operations, situations may occur where no or hardly any new material is introduced into the baling chamber. This may happen on the headlands, where the baler is turned and where no windrows are available, or in field patches where the crop density has fallen very low, e.g. because of crop infection. At such occasions no substantial forces are encountered by the reciprocating plunger and the density control system might derive therefrom that further restriction of the baling chamber cross section is required to obtain the desired bale density. The longer the period that no new material is introduced into the baling chamber, the more restricted the cross section of the baling chamber will be. However, at the first full charge of crop material, the restricted chamber may cause such resistance to the movement of the package under action of the plunger that unacceptable forces may be generated and a part of the baling mechanism may rupture. Important secondary damage may be precluded by providing the drive line of the plunger with shear bolts which break and disconnect the plunger from the tractor drive line when such extraordinary forces are encountered. Such shear bolts are satisfactory for dealing with unforeseeable force peaks, but they will only cause frustration when used for coping with the more frequent effects of force increase on or after turning the baler on headlands.

According to US-A-4,166,414, the normal operation of the bale density control system may be interrupted by a control valve which is operated by the stuffer mechanism. When the stuffer mechanism does not cycle to introduce new crop material into the baling chamber, the valve precludes that pressurized oil is fed to the hydraulic actuator of the movable wall portion. Such system only works satisfactorily in balers having a stuffer mechanism which is operated in response to a complete filling of the feeder duct. Otherwise the system would not distinguish between situations wherein new charges are introduced into the baling chambers and others wherein the plunger is working idly. The sensor for assessing a complete filling of the duct further has to be reliable in order to preclude inopportune adjustment of the baling chamber.

In the New Holland D1000 model, the plunger force was monitored by a pair of load cells which were mounted between the plunger body and the plunger crank arms. As described in EP-A-0,379,230, the signals of the load cells were analysed in order to derive therefrom an indication of the movement of the bale in the bale case. Adjustment of the baler orifice was precluded when the peak forces of the plunger remained below a threshold level, which was thought to be indicative of an empty running plunger. However it was experienced that the accumulated crop package in the baling chamber expanded slightly after each compression stroke, such that the plunger still encountered a substantial force during the following stroke, although no new material was introduced into the baling chamber. Consequently the threshold level had to be set to a level which was impractically close to the normal bale density settings. When baling loose and resilient crop material such as straw, this system did not operate satisfactorily.

Therefore it is an object of the present invention to overcome the problems indicated above and to provide a density control system which is reliable in preventing unwanted baler adjustment when no crop material has been fed into the baling chamber.

According to one aspect of the present invention there is provided a density control system for an agricultural baler, which comprises:
- a baling chamber comprising at least one movable wall portion;
- means for loading charges of crop material into said baling chamber and a plunger for compressing said charges to packages of said crop material therein; and
- means for supplying a plurality of strands of binding material to said packages of crop material for forming a plurality of loops therearound;
said density control system comprising:
- means for sensing the load on said plunger during compression of said charges to establish a value indicative of the density of said packages;
- actuator means for varying the position of said movable wall portion;
   means operatively associated with said sensing means and said actuator means for adjusting the position of said movable wall portion in response to said established density value; and
- means operatively associated with said actuator means for precluding adjustment of said movable wall portion when no substantial amount of crop material has been loaded into said baling chamber,
said precluding means being operable to monitor the movement of said packages and to preclude adjustment of said movable wall portion when no substantial movement of such package has been sensed.

Said density control system is characterized in that said precluding means comprise means for monitoring the movement of said strands in order to establish the movement of said packages.

Thus is prevented that the low load values which are detected on headlands would cause unwanted restriction of the baling chamber. Sensors may be provided for monitoring the transverse motion of the strands of binding material, e.g. by means of vibration sensors. Otherwise sensors can be used for monitoring their longitudinal motion. In this case one may direct sensors to the guide wheels along which binding material is supplied to the baling chamber. Their signals enable establishment of length values for each strand. The sum of the length values may be compared to a threshold value.

The system may establish the movement of the package while the load on the plunger exceeds a predetermined threshold value in order to disregard the other, stray signals, which cannot be related to actual package movement.

Means may be provided for overriding the precluding means when no strand movement may be expected, e.g. immediately after a knotting cycle. Thus is prevented that at the start of each new bale a few charges are compressed to a substantial lower density.

According to another aspect of the present invention there is provided a method for controlling the density of packages of crop material in an agricultural baler, which comprises:
- a baling chamber comprising at least one movable wall portion;
- means for loading successive charges of crop material into said baling chamber for forming a package of said crop material therein and a plunger for compressing said charges to packages of said crop material therein; and
- means for supplying a plurality of strands of binding material to said packages of crop material to form a plurality of loops therearound;
said method comprising the steps of, in any convenient order:
i) monitoring the load on said plunger during the compression of said charges; and
ii) adjusting the position of said movable wall portion in response to the load on said plunger;
iii) monitoring the movement of said packages during the compression thereof; and
iv) precluding further adjustment of the position of said movable wall portion when no substantial movement of said packages has been sensed,
characterized in that said monitoring step comprises monitoring the movement of said strands (35) for establishing the movement of said packages.

A density control system in accordance with the present invention will now be described in further detail, with reference to the following drawings, in which:
Figure 1 is a side elevational view of an agricultural baler equipped with a system for controlling the density of packages of crop material formed therein and a mechanism for tying strands of binding material around these packages;
Figure 2 is an enlarged, fragmentary view of the tying mechanism of Figure 1, showing means for detecting the movement of the strands;
Figure 3 is a hydraulic scheme illustrating the operation of the density control system; and
Figure 4 is a simplified electric circuit diagram used in explaining the operation of the density control system.

The terms "front", "rear", "forward", "rearward", "left" and "right" used throughout this description are determined with respect to the normal direction of travel of the machine in operation. However they are not to be construed as limiting terms.

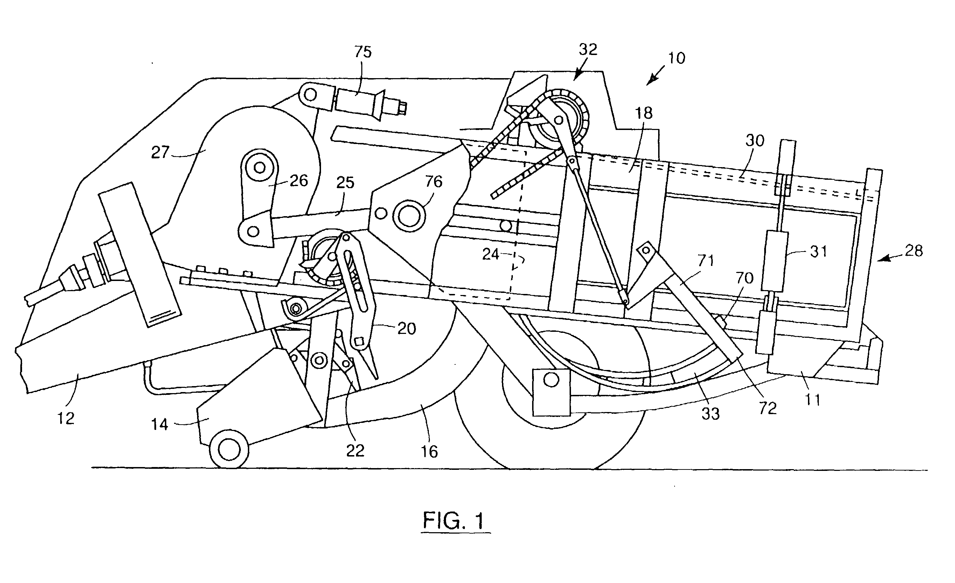

Figure 1 shows an agricultural baler 10 comprising a frame 11 which is equipped with a forwardly extending tongue 12 provided with hitch means (not shown) at its front end for coupling the baler 10 to a towing tractor. A pick-up assembly 14 lifts windrowed crop material off the field as the baler 10 is travelled thereover and delivers such material into the front end of a rearwardly and upwardly curved, charge-forming feeder duct 16. The duct 16 communicates at its upper end with an overhead, fore-and-aft extending baling chamber 18 into which crop charges are loaded by a cyclically operating stuffer mechanism 20. A continuously operating packer mechanism 22 at the lower front end of the feeder duct 16 continuously feeds and packs material into the duct 16 as to cause charges of the crop material to take on and assume the internal configuration of the duct 16 prior to periodic engagement by the stuffer 20 and insertion up into the baling chamber 18. The feeder duct 16 may be equipped with means for establishing whether a complete charge has been formed therein and operating the stuffer 20 in response thereto. Each action of the stuffer 20 introduces a "charge" or "flake" of crop material from the duct 16 into the chamber 18.

A plunger 24 reciprocates in a fore-and-aft direction within the baling chamber 18 under action of a pair of pitman rods 25 which are linked to the crank arms 26 of a gearbox 27 rotated by a shaft which is connected to the PTO shaft of the tractor. The reciprocating plunger 24 pushes each new charge introduced into the baling chamber 18 rearwardly and forms the subsequent charges into a package of crop material, which is pushed by the plunger 24 toward a rearmost discharge aperture 28 of the chamber.

The baling chamber 18 comprises at least one movable wall portion 30 of which the position can be adjusted to vary the cross section of the aperture 28. Reduction of this cross section will increase the resistance to rearward movement of the crop packages and hence the density of the crop material contained therein. Similarly an increase in cross section will reduce the resistance and the density of the newly formed packages. The position of the wall portion 30 is controlled by a pair of actuators in the form of hydraulic cylinders 31 (only one shown in Figure 1) which are installed between the frame 11 and the wall portion 30.

Each package is securely bound in its final compacted form by a tying mechanism 32 before leaving the confines of the baler 10. The length of each bale produced by the baler 10 can be adjustably predetermined by conventional means not shown. The tying mechanism 32 comprises a series of periodically actuated needles 33 which are normally stationed in a stand-by condition below the chamber 18 but which, when actuated, swing upwardly through and across the baling chamber 18 to present twine to a corresponding series of knotters 34 positioned on top of the chamber 18 and extending across the width of the latter. The number of needles 33 and corresponding knotters 34 depends on the transverse width of the baling chamber. A typical large rectangular baler may include 4 to 6 needle and knotter sets for applying 4 to 6 parallel loops of binding material around the bales. The invention will be described with reference to baler having 4 needle and knotter sets, but may also be used in balers equipped with a tying mechanism for applying more or less binding loops.

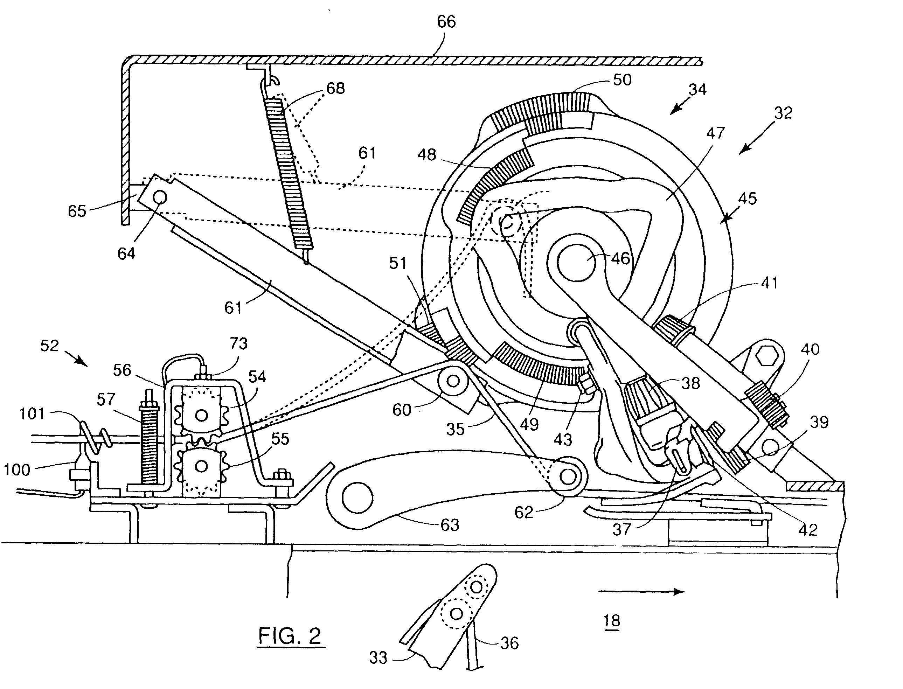

The tying mechanism 32 shown in Figure 2 is operable to form loops of binding material which are each formed from two separate strands of twine 35, 36 supplied from sources on top of and below the baler respectively. Each bound bale will have a stretch of twine from the upper twine source and a second generally U-shaped stretch of twine from the lower twine source lying along the opposite ends of the bale and along the bottom thereof. The two strands 35, 36 are knotted together with two separate knots at two separate locations, i.e. one at the leading end of the bale with respect to rearward discharging movement, and a second knot at the trailing end of the bale with respect to such movement. Each knotter 34 thus operates through two successive knotting sequences during each knotting cycle to prepare the second knot of a just-finished bale and a first knot of the next-to-be-formed bale. Then the four knotters 34 pause until the next package is completely formed, whereupon they are again actuated to move through two successive knot-forming sequences.

Each knotter 34 includes a bill hook 37 designated to rotate about a generally upright axis during each knotting cycle, a gear 38 coupled with the bill hook 37 for rotating the latter, a holder 39 driven by gears 40, 41 for retaining the strands 35, 36 in position during a certain portion of the knotting cycle, and a knife 42 mounted for swinging transversely of the strands about a pivot 43 so as to remove completed knots from the bill hook 37 and severe the same from the sources of strand supply at the end of each knotting operation. A cam follower 44 is located on the opposite side of the pivot 43 for effecting said swinging movement of the knife 42 in response to rotation of a driving disc 45 fixed to a transverse shaft 46 for rotation therewith.

In addition to a cam track 47 for operating the knife 42, the disc 45 also comprises a pair of circumferentially spaced apart gear sections 48, 49 which sequentially mesh with the gear 41 at spaced intervals during rotation of the disc 45 so as to operate the holder 39, and a pair of peripherally outermost, circumferentially spaced apart gear segments 50, 51 which sequentially mesh with the gear 38 of bill hook 37 at spaced intervals during rotation of the disc 45 so as to rotate the bill hook 37. Further details of the knotter 34 and its specific manner of operation may be obtained from US-A-4,074,623.

As depicted in Figure 2, the knotter 34 is about to start its knotting cycle and make the final knot on a fully formed package of crop material located behind the strand 36. The upper strand 35 is shown as leading rearwardly beyond the knotter 34 toward the rear discharge aperture 28 of the baling chamber 18. Tension is maintained in the strand 35 by virtue of a tensioning device 52 which includes a pair of opposed, peripherally ribbed rollers 54 and 55. The upper roller 54 is journalled in a mount 56 which is yieldably biassed toward the lower roller 55 by a spring 57 so as to clamp the strand 35 between the two rollers 54, 55. Similar tensioning devices are provided below the baling chamber 18 to maintain tension in each of the lower strands 36.

The upper strand 35 is guided over an idler roller 60 of a slack take-up arm 61 and under a roller 62 on a cam-operated tension control finger 63 before arriving in the vicinity of the bill hook 37. The slack take-up arm 61 is swingably mounted on a transverse pivot 64 supported by a lug 65 which is attached to a housing 66 overlying the knotter 34. The arm 61 is yieldably biassed upwardly by a tension spring 68.

During normal bale formation the strands 35 are tensioned and hold the arms 61 in their lower position shown in solid lines in Figure 2. However when a package of crop material has been fully formed, a knotting cycle is initiated and the tension control fingers 63 are swung upwardly. Meanwhile the arms 61 move slightly upwardly until the upper twine strands 35 are engaged by the tips of the needles 33, which further drape the upper strands 35 and the lower strands 36 across the bill hooks 37 and into awaiting notches of the holders 39. The slacker take-up arms 61 are pulled down again, while the knotter shaft 46 is rotated to grip the strands in the holders 39, to rotate the bill hooks 37 to form a series of first knots, to operate the knives 42 to severe these first knots from the strands 35, 36 still held in the holders 39, and to rotate the bill hooks 37 a second time to form a series of second knots. Finally the knives 42 are operated once more to severe these second knots from the holders 39 thereby releasing the strands 35, 36. Additional slack provided to the upper strands 35 after completion of the second knot is taken up by the arms 61 which rise to their upper position shown in phantom lines in Figure 2.

Meanwhile new charges of crop material are being fed into the baling chamber 18 by the stuffer mechanism 20 and are pushed rearwardly in the direction of the aperture 28 by the plunger 24. The newly formed package stretches the twine strands 35, 36 and pulls the slack take-up arms 61 downwardly, such that, after a few stuffer strokes, they return to their lower position shown in solid lines in Figure 2.

During normal baler operation the plunger 24 pushes the crop package in the baling chamber 18 rearwardly after each introduction of a new charge by the stuffer mechanism 20. Consequently lengths of binding material are fed to the baling chamber 18 at corresponding intervals.

The cycling of the tying mechanism 32 is monitored by a switch 70 which is installed on the baling chamber 18 (Figure 1) and comprises a pivotable member which is engaged by an arm 71 of the yoke 72 to which the needles 33 are attached, when this yoke is swung rearwardly into its home position. When the package formed inside the baling chamber 18 has reached the predetermined bale length, the tying mechanism 32 is actuated and the needle yoke 72 swings forwardly to deliver the strands 35, 36 to the knotters 34. The switch 70 opens to provide a knotter cycle signal to the density control system described hereafter. When the knotters 34 have cycled and the yoke 72 returns to its home position, the arm 71 closes the switch 70 again.

Proximity switches 73 facing the ribbed surface of the twine tensioner rollers 54 are inserted through their mounts 56 (Figure 2) for monitoring the movement of upper strands 35. Their signals are fed to the density control system also. The number of pulses generated by the proximity switches 73 is proportional to the length of binding material which has been supplied to the baling chamber 18. Alternatively proximity switches may also be installed on the tensioning devices below the baling chamber 18 for monitoring the movement of the lower strands 36.

A short stretch of binding material is pulled into the baling chamber 18 by each movement of the crop package under action of the plunger 24. During the cycling of the tying mechanism 32 substantially larger amounts of binding material are needed for forming the two knots. Thereafter the slack take-up arms 61 are in their upper positions. The first charges of the newly formed package will first tension the strands 35 and pull down the arms 61, before any fresh binding material is pulled inbetween the tensioning rollers 54, 55. Hence the proximity switches 73 sense a small amount of pulses at regular intervals while a crop package is being formed in the baling chamber, followed by a larger amount of pulses when knots are being formed to complete the bale, and a temporary interruption of the pulse train until the strands 35 are tensioned again by a few combined cycles of the stuffer mechanism 20 and the plunger 24. Thereafter each new charge will again engender a small amount of pulses. When no material is fed into the baling chamber 18, e.g. because the baler is being turned on the headland, no pulses will be generated.

The force by which the crop material is compressed, is established by a load sensor 75 which is installed inbetween the plunger gearbox 27 and the baler frame 11. The reaction forces from the package in the baling chamber 18 are transmitted via the plunger 24, the pitman rods 25 and the crank arms 26 upon the gearbox 27 whereof the lower portion is bolted onto the frame 11. The reaction force at the top of the gearbox 27 is measured by the load sensor 75 which hence provides an output signal which is proportional to the plunger forces. Such load sensor 75 has already been described in EP-A-0,389,322. Alternatively, the plunger load may also be established by a pair of hollow wrist pins 76 which connect the rods 25 to the plunger body. Such pins 76 may be equipped with shear stress sensors such a strain gauges for measuring the load on the plunger 24, as described in EP-A-0,223,350.

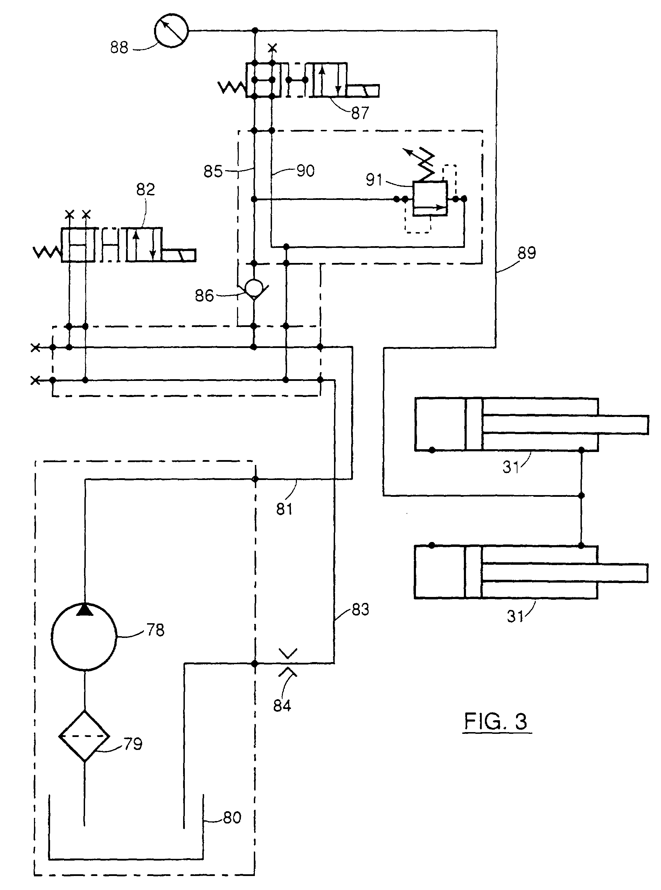

The density control system comprises a hydraulic circuit in accordance with Figure 3. Herein a continuously operated gear pump 78 takes hydraulic oil via a filter 79 from an oil tank 80. The oil is fed via a pressure line 81 to a solenoid-operated by-pass valve 82. When this valve is in its rest position as shown in Figure 3, the oil is permitted to flow back to the oil tank 80 via a return line 83 which is provided with an orifice 84 for slightly pressurizing the oil in the return line 83. When the by-pass valve 82 is actuated, pressurized oil is supplied via a non-return valve 86 and a further pressure line 85 to an inlet port of a solenoid-operated density control valve 87. The corresponding outlet port is connected to a supply line 89 equipped with a manometer 88 for sensing the oil pressure in the density control circuitry. The supply line 89 is linked to the rod ends of the hydraulic cylinders 31 which control the position of the movable wall portion 30. When in its rest position the control valve 87 links the pressure line 85 and the supply line 89 to a return line 90 which is connected to the return line 83. Conventionally, the oil pressure in the pressure line 85 is limited by a pressure relief valve 91. When the solenoid of the control valve 87 is actuated to shift the valve body to the left, the line 89 is disconnected from the return line 90. When no pressurized oil is available at the inlet port, e.g. because the by-pass valve 82 is not actuated, the oil in the line is blocked by the non-return valve 86 and the pressure relief valve 91, such that the cylinders 31 are blocked also to hold the wall portion 30 in position. Otherwise, when the by-pass valve 82 is actuated, pressurized oil will be provided to the control valve 87 and therefrom to the cylinders 31. Oil is added to the rod end chambers of the cylinders and the wall portion 30 is pulled inwardly to reduce the cross section of the baling chamber 18. When the solenoid of the valve 87 is deenergized, its outlet port is reconnected to the return line 90 and oil may flow from the cylinders 31 to the oil tank 80, thereby permitting extension of the cylinders 31 and enlargement of the baling chamber cross section.

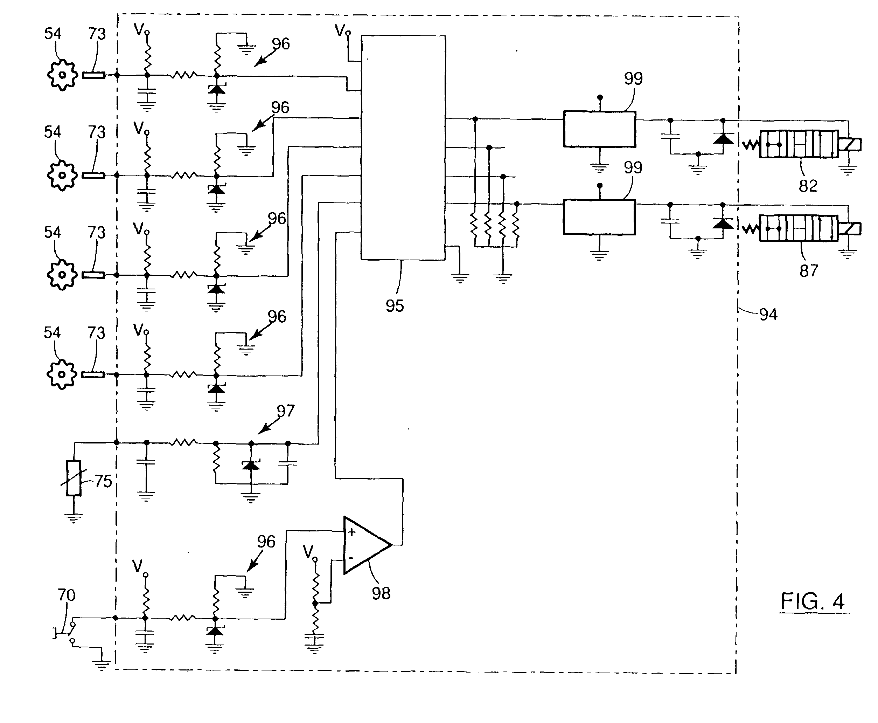

The signals from the needle switch 70, the load sensor 75 and the proximity switches 73 are used in the density control system, which further comprises a circuit board 94 (Figure 4) for analyzing these baler signals and energizing or deenergizing the solenoids of the by-pass valve 82 and the control valve 87. The circuit board 94 includes a microprocessor 95, which may be of the Microchip type PIC16C73, which is provided with erasable memory means into which a program can be loaded in accordance with the description given hereafter. The microprocessor 95 comprises a set of analogous input ports to which the proximity switches 73 are connected via a diode-protected resistor circuits 96. When binding material is supplied to the baling chamber 18, the consequent rotation of the ribbed tensioning rollers 54 makes the proximity switches 73 generate a pulse train which is fed to the analogous input pins.

The output of the load sensor 75 is equally linked via a small resistor circuit 97 to an analogous input pin of the microprocessor 95.

The needle switch 70 is connected to a digital input gate of the microprocessor 95 via a similar resistor circuit 96 and a comparator 98. While the tying mechanism 32 is cycling, the switch 70 is opened and a HIGH signal is provided by the comparator 98 to the digital input pin of the microprocessor.

The output gates of the microprocessor 95 are connected to the input pins of a pair of electronic switches 99, such as Smartfets of the type BTS413A. The output pins of the switches 99 are linked to the solenoids of the hydraulic valves 82 and 87. When actuated the switches 99 provide an actuating current to the valve solenoids for shifting the valves 82, 87 to the left.

The program loaded into the microprocessor 95 screens the input signals from the proximity switches 73, the load sensor 75 and the needle switch 70 and provides an output to the Smartfets 99 in accordance with the description following below.

The microprocessor 95 samples the signal from the load sensor 75 at a rate of 10 KHz. The program adds up the results from 10 consecutive samples and calculates their mean value to establish a new load value. Hence this value is updated at a rate of 1 KHz.

The program compares the mean load value to a first threshold value and when the established mean value exceeds this threshold, the program starts monitoring the signals from the proximity switches 73. The threshold is normally exceeded when the crop package in the baling chamber 18 is engaged by the plunger 24 and the latter starts compressing the newly inserted charge. Each time the signal of one of the proximity switches 73 passes from HIGH to LOW, a corresponding pulse counter is incremented. The pulse counters were cleared at the start of the program, such that the values loaded therein represent the number of ribs of the rollers 54 which passed along the switches 73 while the load value exceeded the threshold load. When the plunger 24 retracts and disengages the crop package, the load value falls below the threshold value, and the program sums the values of the pulse counters. The pulse counters are cleared and the sum is compared to a predetermined minimum pulse value, e.g. 6. If the sum exceeds this minimum value, thereby indicating that the crop package has moved over more than a minimum distance, it is assumed that a new charge has been introduced into the baling chamber and the program sets a HIGH to the output pin of the microprocessor 95 for energizing the solenoid of the by-pass valve 82. The program resets this output after an interval which is slightly shorter than the cycle time of the plunger 24. This interval may be about 1.2 sec long. Otherwise, when no sufficient movement of the crop package was detected, the program resets the value at the output pin and the by-pass valve 82 is not actuated, thereby precluding the supply of pressurized oil to the control valve 87.

The density control program further compares the established plunger load values to a density value which has been selected by the baler operator. This selected density value constitutes a second threshold value. When the mean load value exceeds this threshold value, the program resets the output of the microprocessor to deenergize the solenoid of the density control valve 87. The valve shifts to its rightmost position shown in Figures 3 and 4 and oil from the cylinders 31 flows back to the oil tank 80. Otherwise when the mean load value falls below this second threshold value, the program puts a HIGH on the output pin for energizing the solenoid of the valve 87. The valve shifts to its leftmost position, thereby connecting the cylinder line 89 to the pressure line 85. What is happening further to the cylinder volumes depends on the actual status of the by-pass valve 82. If the latter is energized, pressurized oil is available at the inlet of the valve 87 and the cylinders 31 retract to diminish the cross section of the baling chamber 18. When the by-pass valve 82 was not energized, the cylinder oil remains trapped by the non-return valve 86 and the position of the movable wall portion 30 does not change.

When the crop package has reached a predetermined length the tying mechanism 32 is actuated to knot together the strands 35, 36 to form a completed bale. The needle switch 70 opens and a HIGH input is provided at the corresponding input pin of the microprocessor 95. The density control program senses this input and provides a HIGH output to the Smartfet 99 of the by-pass valve 82. This high output is maintained for a predetermined interval, e.g. 4 seconds, to prevent that the by-pass valve 82 returns to its rest position, although no twine movement will be detected until the package has travelled over a distance which is sufficient to pull down the slack take-up arms 61 and retension the strands 35. This action after each cycling of the tying mechanism 32 allows further adjustment of the cylinders 31 for controlling the bale density, although the proximity switches 73 could not detect any recent twine movement.

In summary, during normal baling operations, the package formed inside the baling chamber 18 is pushed rearwardly by the plunger 24. The consequent twine movement causes the temporary actuation of the by-pass valve 82 and pressurized oil is delivered to the density control valve 87 and the cylinders 31. When a new charge of crop material has been inserted into the baling chamber, the next plunger stroke will effect an excessive plunger load, which causes the valve 87 to deenergize and drain a portion of the oil from the cylinders 31. As the plunger 24 returns to its front position, the plunger load falls below the selected threshold value and the control valve 87 is energized again to add oil to the cylinders 31. In the end an equilibrium is reached in which the amount of oil drained during each compression stroke is equal to the amount of oil added in between the compression strokes.

On the headlands, however, no new charges are stuffed up into the baling chamber 18 and no twine movement will be sensed by the proximity switches 73. After the time interval of 1.2 seconds the solenoid of the by-pass valve 82 is no longer energized and no pressurized oil will be available at the inlet port of the density control valve 87. The latter remains energized as the plunger loads are well below the selected density value, but the cylinders 31 do not retract further as no oil can be fed thereto. The cylinders are kept in position by the non-return valve 86.

This headland routine is overridden for a short time interval after each knotter cycle, as no twine movement may be expected until the crop package has travelled over a distance long enough to retension the strands 35.

By taking account of the twine movement during the compression of the package only, the system prevents that stray signals which are not related to an actual movement of the package would distort the density control routine. Such stray signals may occur when one of the ribs of the roller 54 happens to stop in an area wherein actuation or deactuation of the switch 73 is not precisely defined, and vibrations of the baler 10 oscillate the roller surface.

According to another embodiment of the present invention the tying mechanism 32 may be equipped with a set of vibration sensors 100 which are installed in front of the tensioning devices 52. Sensor 100 has a spiralled sensing member 101 through which the strand 35 is guided. The transverse vibrations of a strand 35 which is being supplied to the baling chamber 18 are transmitted upon the member 101 to which a piezo-electric element has been affixed. The signals from this element are thus indicative of the movement of the corresponding strand.

The signals from the vibration sensors 100 are used by a microprocessor for establishing whether sufficient bale movement occurred during the previous compression stroke and controlling the by-pass valve 82 in response thereto.

Although the invention has been described with reference to a large rectangular baler, other embodiments can be thought of, without departing however from the original idea of the invention.

For instance it may also be used in other types of agricultural balers in which a plurality of strands is supplied to the baling chamber.

The microprocessor 95 may also register the length of the time intervals during which signals are generated and then compare the summed time values to set or reset the output to the by-pass valve 82. In such case it is not necessary to count the pulses from the proximity switches 73 or the vibrations sensors 100. The microprocessor 95 only has to establish the length of each pulse train.

The operation of the tying mechanism 32 can also be detected by a sensor which is actuated by another portion of the knotter 34, e.g. by means of sensor directed to a portion of the driving disc 45.

The invention may also be used in balers equipped with mechanisms for tying other kinds of binding material around the crop packages. For instance one may use wires instead of twine material and wire twisters instead of twine knotters 34.

The proximity switches 73 may also be replaced with other sensors for sensing the rotation of a twine guide wheel; such sensors may include Hall sensors or optical sensors in combination with a light source.

## Claims

1. A density control system for an agricultural baler (10), which comprises:
- a baling chamber (18) comprising at least one movable wall portion (30);
- means (20) for loading charges of crop material into said baling chamber (18) and a plunger (24) for compressing said charges to packages of said crop material therein; and
- means (32) for supplying a plurality of strands (35) of binding material to said packages of crop material for forming a plurality of loops therearound;
said density control system comprising:
- means (75/76) for sensing the load on said plunger (24) during compression of said charges to establish a value indicative of the density of said packages;
- actuator means (78, 31) for varying the position of said movable wall portion (30);
- means operatively associated with said sensing means (75/76) and said actuator means (78, 31) for adjusting the position of said movable wall portion (30) in response to said established density value; and
- means (94, 82) operatively associated with said actuator means (78/31) for precluding adjustment of said movable wall portion (30) when no substantial amount of crop material has been loaded into said baling chamber (18),
said precluding means (94, 82) being operable to monitor the movement of said packages and to preclude adjustment of said movable wall portion (30) when no substantial movement of such package has been sensed,
**characterized in that** said precluding means (94, 82) comprise means (73/100) for monitoring the movement of said strands (35) in order to establish the movement of said packages.

2. A density control system according to claim 1, **characterized in that** said monitoring means comprise vibration sensors (100) sensing the transverse motion of said strands (35) induced by the longitudinal displacement of said strands (35) caused by the longitudinal displacement of the package to which said strands (35) are supplied.

3. A density control system according to claim 2, **characterized in that** said vibration sensors (100) comprise a member (101) engaged by one of said strands (35) and a piezo-electric element which is operatively linked to said member.

4. A density control system according to claim 1, **characterized in that** said monitoring means comprise means (73) for sensing the longitudinal displacement of the strands (35) caused by the longitudinal displacement of the package to which said strands (35) are supplied.

5. A density control system according to claim 4, **characterized in that** said sensing means comprise sensors (73) monitoring the movement of guide wheels (54) along which said strands (35) are supplied to said package.

6. A density control system according to claim 5, **characterized in that** said guide wheels (54) comprise a ribbed strand-engaging surface and said monitoring sensors comprise proximity switches (73) directed to said ribbed surface for sensing the proximity of a rib of said surface facing said switches (73).

7. A density control system according to claim 5 or 6, **characterized in that** said guide wheels (54) apply a pre-tension to said strands (35).

8. A density control system according to any of the preceding claims, **characterized in that** it comprises means (95) for establishing values indicative of the length of strand material supplied during one time interval or a plurality of time intervals.

9. A density control system according to claim 8, **characterized in that**:
said establishing means (95) establish said length values during the interval or intervals during which said load sensing means (75/76) sense a load exceeding a predetermined threshold load value.

10. A density control system according to claim 8 or 9, **characterized in that** said precluding means (94, 82) preclude adjustment of said movable wall portion (30) when said established length values are below a predetermined threshold value.

11. A density control system according to any of the preceding claims and wherein said baler (10) further comprises:
- means (32) for tying said loops together to form completed bales; and
- means (70) for sensing a cycling of said tying means (32),
**characterized in that** said precluding means (94, 82) are operatively linked with said cycling sensing means (70) to enable adjustment of said movable wall portion (30) in response to said load sensing means (75/76) during a predetermined time interval after said tying means (32) have cycled.

12. A density control system according to claim 11, **characterized in that** said tying means (32) comprise a set of needles (33) remaining in a home position in between tying cycles and said means for sensing a cycling of said tying means comprise a sensor (70) actuated by said needle set (33) when in their home position.

13. A density control system according to any of the preceding claims, **characterized in that**:
- said actuator means comprise a continuously operated hydraulic pump (78) and a hydraulic cylinder (31) linked thereto; and
- said precluding means (94, 82) comprise a by-pass valve (82) linked to said hydraulic pump (78) for precluding further supply of hydraulic oil to said hydraulic cylinder (31).

14. A method for controlling the density of packages of crop material in an agricultural baler (10), which comprises:
- a baling chamber (18) comprising at least one movable wall portion (30);
- means (20) for loading successive charges of crop material into said baling chamber (18) for forming a package of said crop material therein; and a plunger (24) for compressing said charges to packages of said crop material therein; and
- means (32) for supplying a plurality of strands (35) of binding material to said packages of crop material to form a plurality of loops therearound;
said method comprising the steps of, in any convenient order:
i) monitoring the load on said plunger (24) during the compression of said charges; and
ii) adjusting the position of said movable wall portion (30) in response to the load on said plunger (24);
iii) monitoring the movement of said packages during the compression thereof; and
iv) precluding further adjustment of the position of said movable wall portion (30) when no substantial movement of said packages has been sensed,
**characterized in that** said monitoring step comprises monitoring the movement of said strands (35) for establishing the movement of said packages.

15. A method according to claim 14, **characterized in that** said monitoring step comprises sensing the transverse vibrations induced by the longitudinal movements of said strands (35).

16. A method according to claim 14, **characterized in that** the sensing step (i) comprises sensing the longitudinal movement of said strands.

## Patentansprüche

1. Dichtesteuersystem für eine landwirtschaftliche Ballenpresse (10), die folgendes umfaßt:
- eine Ballenkammer (19), die zumindest einen beweglichen Wandabschnitt (30) umfaßt,
- Einrichtungen (20) zum Zuführen von Ladungen von Erntematerial in die Ballenkammer (18) und ein Preßkolben (24) zum Komprimieren der Ladungen zu Packen des Erntematerials in der Ballenkammer, und
- Einrichtungen (32) zur Zuführung einer Anzahl von Strängen (35) aus Bindematerial zu den Packen aus Erntematerial zur Bildung einer Vielzahl von Schlingen um diese,
wobei das Dichtesteuersystem folgendes umfaßt:
- Einrichtungen (75/76) zum Messen der Last auf den Preßkolben (24) während der Kompression der Ladungen zur Ermittlung eines Wertes, der die Dichte der Packen anzeigt,
- Stellgliedeinrichtungen (78, 31) zur Änderung der Position des beweglichen Wandabschnittes (30),
- Einrichtungen, die betriebsmäßig mit den Meßeinrichtungen (75/76) und den Stellgliedeinrichtungen (78, 31) verbunden sind, um die Position des beweglichen Wandabschnittes (30) in Abhängigkeit von dem ermittelten Dichtewert einzustellen, und
- mit den Stellgliedeinrichtungen (78/31) betriebsmäßig verbundene Einrichtungen (94, 82) zum Auschließen einer Einstellung des beweglichen Wandabschnittes (30), wenn keine wesentliche Menge an Erntematerial in die Ballenkammer (18) eingeführt wurde,
wobei die die Einstellung ausschließenden Einrichtungen (94, 82) betreibbar sind, um die Bewegung der Packen zu überwachen und die Einstellung des beweglichen Wandabschnittes (30) auszuschließen, wenn keine wesentliche Bewegung eines derartigen Packens gemessen wurde,
**dadurch gekennzeichnet, daß** die die Einstellung ausschließenden Einrichtungen (94, 82) Einrichtungen (73/100) zur Überwachung der Bewegung der Stränge (35) umfassen, um die Bewegung der Packen zu ermitteln.

2. Dichtesteuersystem nach Anspruch 1, **dadurch gekennzeichnet, daß** die Überwachungseinrichtungen Schwingungssensoren (100) umfassen, die die Querbewegung der Stränge (35) messen, die durch die Längsbewegung der Stränge (35) hervorgerufen wird, die durch die Längsbewegung des Packens hervorgerufen wird, dem die Stränge (35) zugeführt werden.

3. Dichtesteuersystem nach Anspruch 2, **dadurch gekennzeichnet, daß** die Schwingungssensoren (100) ein Element (101), das mit einem der Stränge (35) in Eingriff steht, und ein piezoelektrisches Element umfassen, das betriebsmäßig mit dem Element verbunden ist.

4. Dichtesteuersystem nach Anspruch 1, **dadurch gekennzeichnet, daß** die Überwachungseinrichtungen Einrichtungen (73) zur Messung der Längsbewegung der Stränge (35) umfassen, die durch die Längsbewegung des Packens hervorgerufen wird, dem die Stränge (35) zugeführt werden.

5. Dichtesteuersystem nach Anspruch 4, **dadurch gekennzeichnet, daß** die Meßeinrichtungen Sensoren (73) zur Überwachung der Bewegung von Führungsrädern (54) umfassen, über die die Stränge (35) den Packen zugeführt werden.

6. Dichtesteuersystem nach Anspruch 5, **dadurch gekennzeichnet, daß** die Führungsräder (54) eine mit Rippen versehene, mit dem Strang in Eingriff kommende Oberfläche aufweisen, und daß die Überwachungssensoren Näherungsschalter (73) umfassen, die auf die gerippte Oberfläche gerichtet sind, um die Nähe einer Rippe der auf die Schalter (73) gerichteten Oberfläche zu messen.

7. Dichtesteuersystem nach Anspruch 5 oder 6, **dadurch gekennzeichnet, daß** die Führungsräder (54) eine Vorspannung auf die Stränge (35) ausüben.

8. Dichtesteuersystem nach einem der vorhergehenden Ansprüche, **dadurch gekennzeichnet, daß** es Einrichtungen (95) zur Ermittlung von Werten aufweist, die die Länge des während eines Zeitintervalls oder einer Vielzahl von Zeitintervallen zugeführten Strangmaterials anzeigen.

9. Dichtesteuersystem nach Anspruch 8, **dadurch gekennzeichnet, daß** die Ermittlungseinrichtungen (95) die Längenwerte während des Intervalls oder der Intervalle ermitteln, während der die Lastmeßeinrichtungen (75/76) eine Last messen, die einen vorgegebenen Last-Schwellenwert übersteigt.

10. Dichtesteuersystem nach Anspruch 8 oder 9, **dadurch gekennzeichnet, daß** die eine Einstellung ausschließenden Einrichtungen (94, 82) eine Einstellung des beweglichen Wandabschnittes (30) ausschließen, wenn die ermittelten Längenwerte unterhalb eines vorgegebenen Schwellenwertes liegen.

11. Dichtesteuersystem nach einem der vorhergehenden Ansprüche, bei dem die Ballenpresse (10) weiterhin folgendes umfaßt:
- Einrichtungen (32) zum Zusammenknüpfen der Schlingen, um fertige Ballen zu bilden, und
- Einrichtungen (70) zur Messung einer zyklischen Betätigung der Knüpfereinrichtungen (32),
**dadurch gekennzeichnet, daß** die die Einstellung ausschließenden Einrichtungen (94, 82) betriebsmäßig mit den die zyklische Betätigung messenden Meßeinrichtungen (70) verbunden sind, um eine Einsteilung des beweglichen Wandabschnittes (30) in Abhängigkeit von den Lastmeßeinrichtungen (75/76) während eines vorgegebenen Zeitintervalls nach der zyklischen Betätigung der Knüpfereinrichtungen (32) zu ermöglichen.

12. Dichtesteuersystem nach Anspruch 11, **dadurch gekennzeichnet, daß** die Bindeeinrichtungen (32) einen Satz von Nadeln (33) umfassen, die zwischen den Bindezyklen in einer Ruhestellung verbleiben, und daß die Einrichtungen zur Messung einer zyklischen Betätigung der Bindeeinrichtungen einen Sensor (70) umfassen, der durch den Nadelsatz (33) betätigt wird, wenn dieser sich in der Ruhestellung befindet.

13. Dichtesteuersystem nach einem der vorhergehenden Ansprüche, **dadurch gekennzeichnet, daß**:
- die Stellgliedeinrichtungen eine kontinuierlich betätigte Hydraulikpumpe (78) und einen hiermit verbundenen Hydraulikzylinder (31) umfassen, und
- die die Einstellung ausschließenden Einrichtungen (94, 82) ein Nebenschlußventil (82) einschließen, das mit der Hydraulikpumpe (78) verbunden ist, um eine weitere Zufuhr des Hydrauliköls an den Hydraulikzylinder (31) auszuschließen.

14. Verfahren zur Steuerung der Dichte von Packen aus Erntematerial in einer landwirtschaftlichen Ballenpresse (10), die folgendes umfaßt:
- eine Ballenkammer (18), die zumindest einen beweglichen Wandabschnitt (30) aufweist,
- Einrichtungen (20) zum Zuführen aufeinanderfolgender Ladungen aus Erntematerial in die Ballenkammer (18) zur Bildung eines Packens aus dem Emtematerial in der Ballenkammer, und einen Preßkolben (24) zum Komprimieren der Ladungen zu Packungen aus Erntematerial in der Ballenkammer, und
- Einrichtungen (32) zur Zuführung einer Anzahl von Strängen (35) aus Bindematerial zu den Packen aus Erntematerial zur Bildung einer Anzahl von Schlingen um diese Packen herum,
wobei das Verfahren die folgenden Schritte in irgendeiner zweckmäßigen Reihenfolge umfaßt:
i) Überwachen der Last auf den Preßkolben (24) während der Kompression der Ladungen, und
ii) Einstellen der Position des beweglichen Wandabschnittes (30) in Abhängigkeit von der Last auf den Preßkolben (24),
iii) Überwachen der Bewegung der Packen während deren Kompression, und
iv) Ausschließen einer weiteren Einstellung der Position des beweglichen Wandabschnittes (30), wenn keine wesentliche Bewegung der Packen gemessen wurde,
**dadurch gekennzeichnet, daß** der Überwachungsschritt die Überwachung der Bewegung der Stränge (35) zur Ermittlung der Bewegung der Packen umfaßt.

15. Verfahren nach Anspruch 14, **dadurch gekennzeichnet, daß** der Überwachungsschritt die Messung der Querschwingungen umfaßt, die durch die Längsbewegungen der Stränge (35) hervorgerufen werden.

16. Verfahren nach Anspruch 14, **dadurch gekennzeichnet, daß** der Meßschritt (i) die Messung der Längsbewegung der Stränge umfaßt.

## Revendications

1. Système de contrôle de densité pour une botteleuse agricole (10), comprenant:
- une chambre de bottelage (18) disposant d'au moins une portion mobile de paroi (30);
- des moyens (20) de chargement de matériau de récolte dans ladite chambre de bottelage (18) et un piston (24) destiné à y comprimer lesdites charges en balles dudit matériau de récolte; et
- des moyens (32) destinés à fournir une pluralité de brins (35) de matériau de ligature auxdites balles de matériau de récolte afin de constituer une pluralité de boucles autour d'elles;
ledit système de contrôle de densité comprenant:
- des moyens (75/76) de détection de l'effort sur ledit piston (24) au cours de la compression desdites charges afin de déterminer une valeur indicative de la densité desdites balles;
- un moyen d'actionneur (78, 31) destiné à faire varier la position de ladite portion mobile de paroi (30);
- des moyens associés fonctionnellement avec lesdits moyens de détection (75/76) et ledit moyen d'actionneur (78, 31) pour ajuster la position de ladite portion mobile de paroi (30) en réponse à ladite valeur déterminée de densité; et
- des moyens (94, 82) associés fonctionnellement avec ledit moyen d'actionneur (78/31) pour empêcher l'ajustement de ladite portion mobile de paroi (30) lorsque aucune quantité substantielle de matériau de récolte n'a été chargée dans ladite chambre de bottelage (18),
lesdits moyens d'empêchement (94, 82) étant à même de surveiller le mouvement desdites balles et d'empêcher l'ajustement de ladite portion mobile de paroi (30) lorsque aucun mouvement substantiel d'une telle balle n'a été détecté,
**caractérisé en ce que** les moyens (94, 82) d'empêchement comprennent des moyens (73/100) de surveillance du mouvement desdits brins (35) afin de déterminer le mouvement desdites balles.

2. Système de contrôle de densité selon la revendication 1, **caractérisé en ce que** lesdits moyens de surveillance comprennent des capteurs de vibrations (100) détectant le mouvement transversal desdits brins (35) induit par le déplacement longitudinal desdits brins (35) causé par le déplacement longitudinal de la balle sur laquelle lesdits brins (35) sont distribués.

3. Système de contrôle de densité selon la revendication 2, **caractérisé en ce que** lesdits capteurs de vibrations (100) comprennent un organe (101) en contact avec l'un desdits brins (35) et un élément piézo-électrique relié fonctionnellement audit organe.

4. Système de contrôle de densité selon la revendication 1, **caractérisé en ce que** les moyens de surveillance comprennent des moyens (73) destinés à détecter le déplacement longitudinal des brins (35) causé par le déplacement longitudinal de la balle sur laquelle lesdits brins (35) sont distribués.

5. Système de contrôle de densité selon la revendication 4, **caractérisé en ce que** lesdits moyens de détection comprennent des capteurs (73) surveillant le mouvement de roues de guidage (54) le long desquelles lesdits brins (35) sont distribués sur ladite balle.

6. Système de contrôle de densité selon la revendication 5, **caractérisé en ce que** lesdites roues de guidage (54) comprennent une surface crénelée en contact avec le brin et lesdits capteurs de surveillance comprennent des interrupteurs de proximité (73) dirigés vers ladite surface crénelée afin de détecter la proximité d'une nervure de ladite surface disposée en face desdits interrupteurs (73).

7. Système de contrôle de densité selon la revendication 5 ou 6, **caractérisé en ce que** lesdites roues de guidage (54) appliquent une tension préalable auxdits brins (35).

8. Système de contrôle de densité selon l'une quelconque des revendications précédentes, **caractérisé en ce qu'**il comprend des moyens (95) destinés à déterminer des valeurs indicatives de la longueur de matériau de brin distribué au cours d'un intervalle de temps ou de plusieurs intervalles de temps.

9. Système de contrôle de densité selon la revendication 8, **caractérisé en ce que**:
lesdits moyens de détermination (95) déterminent lesdites valeurs de longueur pendant l'intervalle ou les intervalles au cours duquel ou desquels lesdits moyens de détection d'effort (75/76) détectent un effort dépassant une valeur prédéterminée de seuil d'effort.

10. Système de contrôle de densité selon la revendication 8 ou 9, **caractérisé en ce que** les moyens d'empêchement (94, 82) empêchent l'ajustement de ladite portion mobile de paroi (30) lorsque lesdites valeurs déterminées de longueur sont inférieures à une valeur prédéterminée de seuil.

11. Système de contrôle de densité selon l'une quelconque des revendications précédentes et dans lequel ladite botteleuse (10) comprend en outre:
- des moyens (32) pour ligaturer lesdites boucles entre elles pour former des bottes achevées; et
- des moyens (70) pour détecter un cycle desdits moyens de ligature (32),
**caractérisé en ce que** lesdits moyens d'empêchement (94, 82) sont reliés fonctionnellement avec lesdits moyens de détection de cycle (70) pour permettre l'ajustement de ladite portion mobile de paroi (30) en réponse auxdits moyens de détection d'effort (75/76) pendant un intervalle de temps prédéterminé après que lesdits moyens de ligature (32) ont effectué un cycle.

12. Système de contrôle de densité selon la revendication 11, **caractérisé en ce que** lesdits moyens de ligature (32) comprennent un ensemble d'aiguilles (33) demeurant en position de repos entre des cycles de ligature et lesdits moyens de détection de cycle desdits moyens de ligature comprennent un capteur (70) actionné par ledit ensemble d'aiguilles (33) lorsqu'il se trouve dans sa position de repos.

13. Système de contrôle de densité selon l'une quelconque des revendications précédentes, **caractérisé en ce que**:
- lesdits moyens d'actionneurs comprennent une pompe hydraulique (78) en fonctionnement permanent et un cylindre hydraulique (31) lui étant raccordé; et
- lesdits moyens d'empêchement (94, 82) comprennent une soupape de dérivation (82) raccordée à ladite pompe hydraulique (78) afin d'empêcher une alimentation supplémentaire d'huile hydraulique audit cylindre hydraulique (31).

14. Méthode pour le contrôle de la densité de balles de matériau de récolte dans une botteleuse agricole (10), comprenant:
- une chambre de bottelage (18) disposant d'au moins une portion mobile de paroi (30);
- des moyens (20) destinés à introduire des charges successives de matériau de récolte dans ladite chambre de bottelage (18) afin d'y constituer une balle dudit matériau de récolte et un (24) piston destiné à y comprimer lesdites charges dudit matériau de récolte; et
- des moyens (32) destinés à distribuer une pluralité de brins (35) de matériau de ligature vers lesdites balles de matériau de récolte pour former une pluralité de boucles autour d'elles;
ladite méthode comprenant, en tout ordre convenable, les étapes:
i) de surveillance de l'effort sur ledit piston (24) au cours de la compression desdites charges; et
ii) d'ajustement de la position de ladite portion mobile (30) de paroi en réponse à l'effort sur ledit piston (24);
iii) de surveillance du mouvement desdites balles au cours de leur compression; et
iv) d'empêchement d'un ajustement supplémentaire de la position de ladite portion mobile de paroi (30) lorsque aucun mouvement substantiel desdites balles n'a été détecté,
**caractérisée en ce que** ladite étape de surveillance comprend la surveillance du mouvement desdits brins (35) afin de déterminer le mouvement desdites balles.

15. Méthode selon la revendication 14, **caractérisée en ce que** ladite étape de surveillance comprend la détection des vibrations transversales induites par le mouvement longitudinal desdits brins (35).

16. Méthode selon la revendication 14, **caractérisée en ce que** l'étape de détection (i) comprend la détection du mouvement longitudinal desdits brins.
